# EUROPEAN PATENT SPECIFICATION

(11) **EP 3 015 615 B1**
(45) Date of publication and mention of the grant of the patent: **29.09.2021**
(21) Application number: 15191682.2
(22) Date of filing: 27.10.2015
(51) Int. Cl.: E04C 1/39, A01G 9/02

(54) **BUILDING BLOCK**
BAUSTEIN
BLOC DE CONSTRUCTION

(30) Priority: 31.10.2014 BE 201405042
(43) Date of publication of application: 04.05.2016
(73) Proprietor: Marlux NV, 3980 Tessenderlo (BE)
(72) Inventor: MONTEN, Ludo, 3980 Tessenderlo (BE); VAN HALEWYCK, Thomas, 2000 Antwerpen (BE); VAN DE VELDE, Pieter, 2000 Antwerpen (BE)
(74) Representative: Arnold & Siedsma

(56) References cited:
- EP-A1- 0 916 255
- EP-A2- 2 341 187
- US-A- 5 469 655
- None

## Description

### BACKGROUND OF THE INVENTION

Building blocks used as building material can be manufactured from different materials and in different embodiments. The most frequently used building blocks are bricks, traditionally manufactured from clay, with a typical rectangular shape. Apart from the traditional closed shape that is currently still used as face bricks, there are also the high-speed building blocks, known for their large size and perforations.

Apart from concrete building blocks, these high-speed building block can also be manufactured from other material. Well-known alternatives are, among others, the cell concrete blocks and argex blocks. The cell concrete blocks are characterised by a high cell structure that keeps in air, which leads to higher insulation value. Argex blocks are also used to increase the insulation value of the existing concrete blocks by including argex granules in it. The current study thus clearly focuses on the improvement of the material properties, but it does not deviate from the basic functionality, namely being able to lay the building blocks neatly on top of one another or to cement the building blocks to a building construction. To simplify the placement, the building blocks often have teeth or grooves on the one side or grips such as hand or finger grips to position the blocks easier and to simplify the handling of the building blocks. Building blocks as known under the International Industrial Design DM 065272 also have openings for utility pipes and to place junction boxes, but none of the existing building blocks offer an opportunity to easily suspend items from.

Document US 5.469.655 discloses a building block according to the preamble of claim 1.

It is then also the objective of this invention to provide a solution for this problem, by providing a building block with fittings that will enable elements such as shelves, seats, wall cupboards, lights, flower boxes and such to be suspended from a building construction made from the building blocks described in this invention. As described below, the building blocks of this invention depends on the presence of central and peripheral openings where the corresponding suspension elements can be placed.

### SUMMARY OF THE INVENTION

As indicated, this invention is based on adjustments to a building block to add elements, and therefore functionality, to the wall in a very flexible manner. The invention, as claimed in claim 1, is based on the combination of a centrally and peripherally integrated recesses that are accessible through a lateral face of the building block, which makes it possible to suspend heavier and lighter attributes from the wall without adhesive agents.

### BRIEF DESCRIPTION OF THE FIGURES

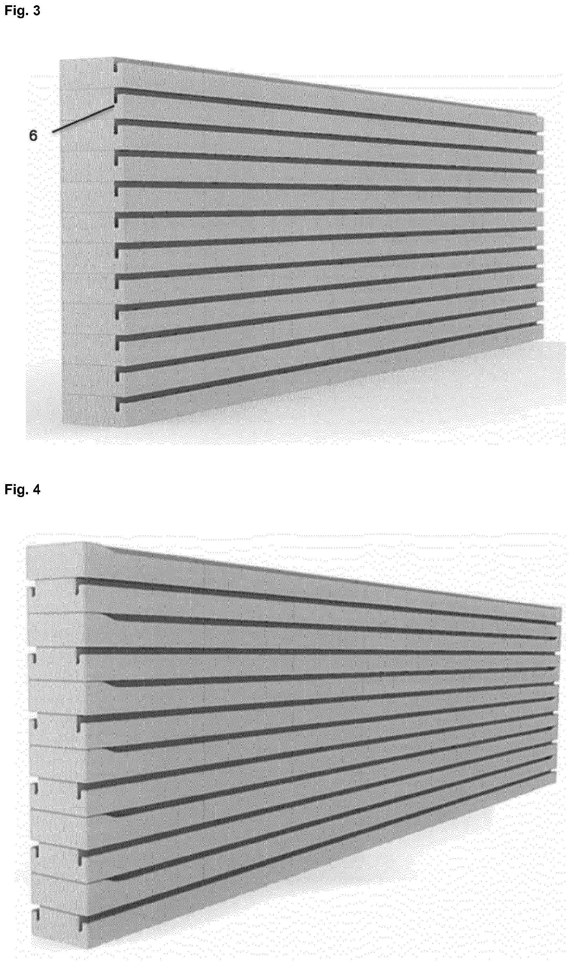

Figure 3 and figure 4 show a building block according to the invention with the drainage element (6) open toward the outside of the building block, the other figures do not show such a drainage element (6) but help to understand the invention.

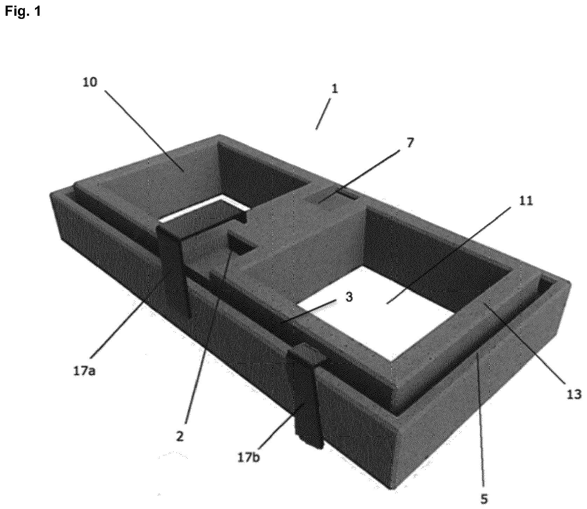

**Fig. 1****:** A perspective top view of a building block (1) provided with two lateral, centrally located, cavities (10) and (11) with raised walls (13) that surround the cavities. In this embodiment, the centrally integrated recesses (2) are accessible by means of a groove (7) via the lateral faces of the building block to hook up a suspension element (17a). In this embodiment, the peripheral recess consists of a collar with a raised edge (5) on all the faces of the building block, where this raised edge (5) is lower than the thickness of the building block and accordingly facilitates the ability of hooking up a suspension element (17b) via the lateral faces

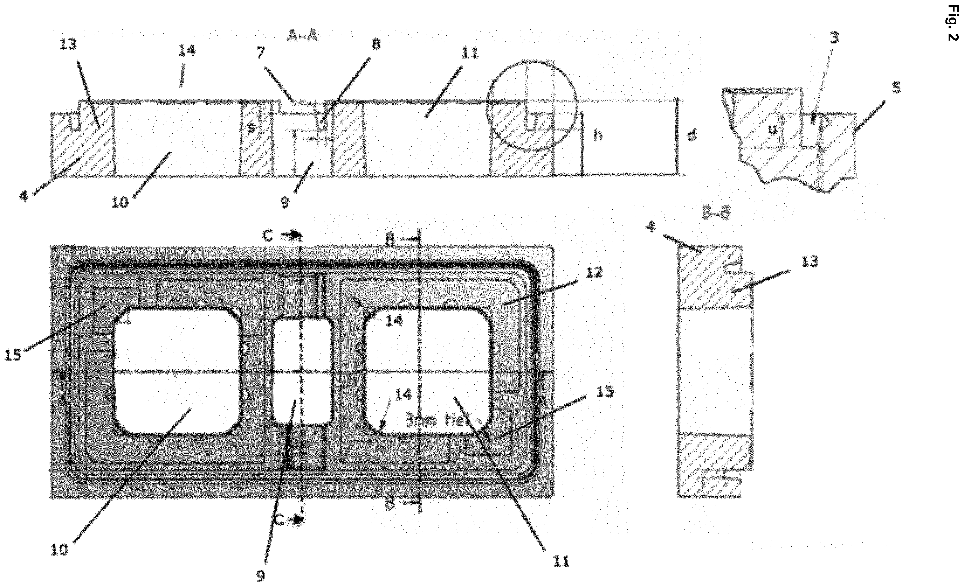

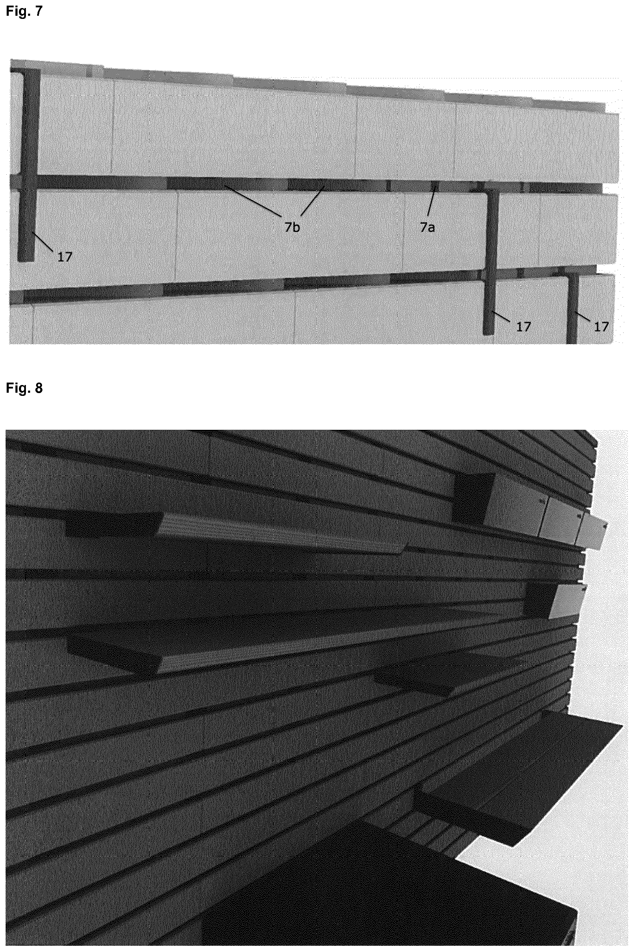

**Fig. 2****:** Is a top view of a building block (1). As well as cross-section according to coordinates A-A and B-B and a detailed drawing of the cross section of the peripherally integrated collar (4). In this embodiment, the building block is provided with three centrally located cavities (9), (10) and (11) with raised walls (13) that surround the cavities. In this embodiment, the centrally integrated recesses (9) are incorporated into the centrally located cavity (9) and are accessible by means of a groove (7) over the entire width of the building block via the faces of the building block to hang up a suspension element. The groove also contains a transversal groove (8) that is connected to the collar (4) that completely surrounds the building block and has been provided with a raised edge (5) to hook up a suspension element. The height (h) of this edge (5) is lower than the total thickness (d) of the building block in order to realize sufficient space during the processing of a building block in a construction, via which this building block will always remain accessible from the outside to hook up objects as indicated in figure 8. A similar space follows from the depth (s) of the groove (7) and, in the building block shown, this depth (s) is equal to the difference between (d) and (h). The building block shown has also been provided with multiple recesses (14) and positioning elements (15) on the face (12) of the raised walls (13). The excision (u) in the collar (4) is located at the same depth as the transversal groove (8) and together ensure drainage from within the peripheral collar to the central cavity (9) of the building block. It would be clear to the professional that the drainage is possible for insofar as the transversal groove (8) is located lower than or at the same level as the excision (u) in the collar (4). The C-C axis indicates the transversal diameter of the building block shown.
**Fig. 3****:** A perspective lateral view of a wall built with building blocks according to one of the embodiments of this invention. In the embodiment shown, the peripherally integrated recess is a collar on only one of the lateral faces of the building block.
**Fig. 4****:** A perspective lateral view of a wall built with building blocks according to one of the embodiments of this invention. In the embodiment shown, the peripherally integrated recess is a collar on two opposite lateral sides, in particular the longitudinal lateral faces of the building block. As becomes apparent from the image, the collar does not necessarily extend over the entire length of the building block and the height of the raised edge (5) of the collar can differ over the length of the building block.

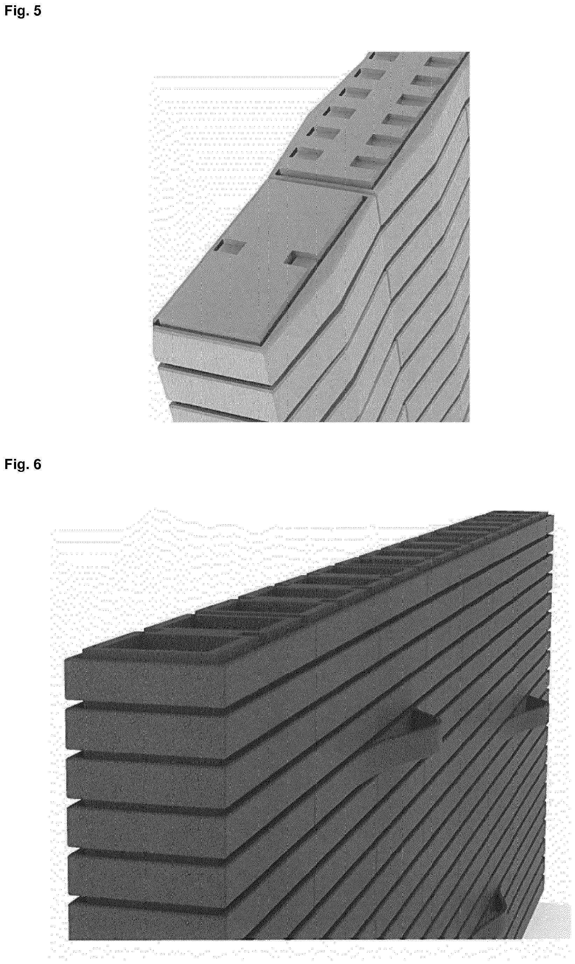

**Fig. 5****:** A perspective top view of a wall built with building blocks according to one of the embodiments of this invention. In the embodiment shown, the peripherally integrated recess is a collar on all lateral faces of the building block. In this embodiment the building blocks have centrally integrated recesses in the core that are accessible by means of the groove from the lateral faces. In the building block shown on the left, only a few of these recesses are located in the middle of the building block. To increase the flexibility of suspending heavier elements and/or to distribute the power over multiple points, the building block could also contain multiple central recesses that are distributed at regular intervals across the length of the building block (see the building block shown on the right of this figure). In addition, the outer-surface of the building block according to this invention may consist of different textures and embossed motifs.
**Fig. 6****:** A perspective top view of a wall built with building blocks according to one of the embodiments of this invention. In the embodiment shown, the peripherally integrated recess is a collar on all lateral faces of the building block. In this embodiment the building blocks have two lateral cavities and a full core with centrally integrated recesses that are accessible by means of the groove from the lateral faces, analogous to the building block according to figure 1. In addition, the outer-surface of the building blocks according to this invention may consist of different textures and embossed motifs.
**Fig. 7****:** A perspective lateral view of a wall built with building blocks according to one of the embodiments of this invention. The wall shown is built from a combination of building blocks with different groove widths to the centrally integrated recesses. As explained extensively in the application, a wider groove (7b) provides a larger supporting surface that facilitates hooking up heavier objects, besides the narrower grooves (7a). The suspension elements (17) are also shown.
**Fig. 8****:** A perspective lateral view of a wall built with building blocks according to one of the embodiments of this invention. A building construction built from building block according to the invention facilitates hooking up of different objects such as shelves, flower boxes and cupboards.

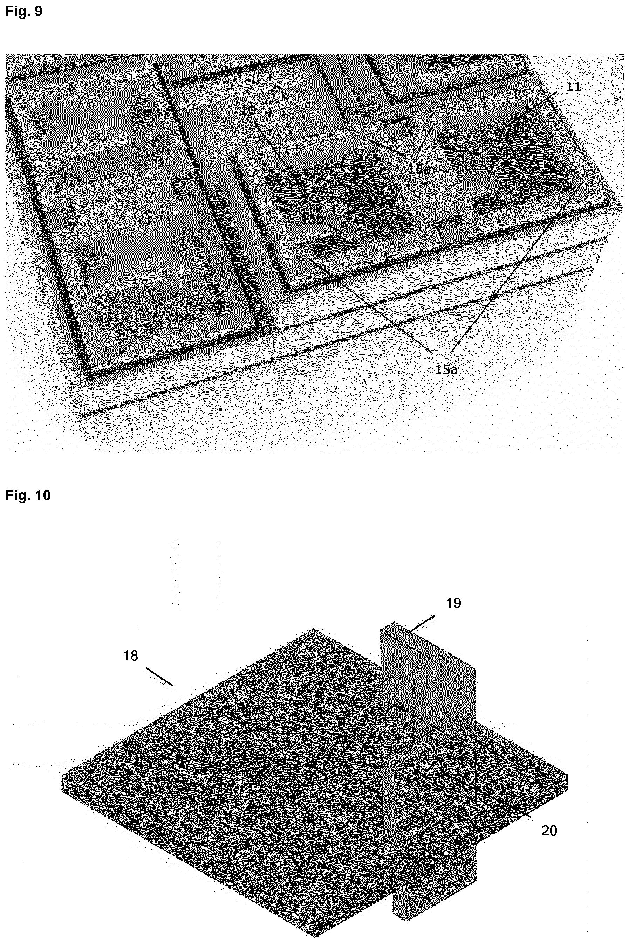

**Fig. 9****:** A perspective top view of a wall built with building blocks according to one of the embodiments of this invention. In this embodiment, the positioning elements are studs (15a) that fit into the opposite cavities (15b) in the lower side of the building block. Here, the cavities are formed by tubular elements in the corners of the centrally located cavities (10) and (11).
**Fig. 10****:** A perspective top view of an anchor plate (18) that fits in the positioning elements (15) as shown in image 2. The anchor plate fits in the recesses (15) provided and the raised edges (19) grip the raised walls.

### DESCRIPTION OF THE INVENTION

This invention has as objective offering a building block that facilitates realization of building constructions onto which simple attributes can be hooked without the need for anchoring agents, such as plugs and chemical anchors that are fitted in the building construction afterwards.

In this regard, the invention, in first instance, offers a building block (1) comprising a centrally integrated recess (2) and a peripherally integrated recess (3), for hooking up suspension elements, where this centrally and peripherally integrated recess is accessible via one or more of the lateral faces of the building block. In this way, these recesses of the building block in a construction remain accessible from the outside after processing without drilling, impacting or breaking.

As becomes apparent from the figures, the centrally integrated recesses (2) are located in the core of the building block, while the peripherally integrated recesses (3) are located in the lateral faces of the building block. Therefore, and in comparison to the peripherally integrated recesses, there is more building block material between the mounting point in the recess and the outer surface of the building block for the centrally integrated recesses. The centrally integrated recesses therefore allow for suspending heavier objects such as benches and wall cabinets. On the other hand, the peripherally integrated recesses are therefore more suitable for lighter objects such as lighting, shelves, flower boxes and such. In an embodiment of the invention, the centrally integrated recesses are located at distances from 1/6 to 1/2 of the entire width of the building block, particularly at distances from 1/4 to 1/2 of the entire width of the building block; more particularly, at distances from 1/4 to 1/3 of the entire width of the building block. In an embodiment of the invention, the peripherally integrated recesses can be found at distances from 1/20 to 1/8 of the entire width of the building block, particularly at distances from 1/15 to 1/10 of the entire width of the building block.

As is explained in more detail in respect of the centrally integrated recesses (2), the peripherally integrated recesses is accessible from the outside via a lateral face of the building block. In a preferential form the peripherally integrated recess presents itself as a collar (4) in one or more of the lateral faces of the building block. The attributes such as shelves, wall cabinets, lighting and flower boxes can be freely hooked onto the peripheral recess by using a collar. In contrast to the peripheral suspension elements as shown in building block from US patent publication US2008/134615. There is therefore no restriction in the positioning of the lighter attributes that only hook onto the integrated peripheral recess of the building block. Since the above takes place without anchoring agents such as plugs and chemical anchors, one obtains the maximum freedom in positioning and repositioning the attributes on the wall by using a collar-like peripherally integrated recess. Such flexibility in hooking up elements also lacks in the US patent publication US2011/211918 where there is only a central recess. In building blocks according to this invention, this collar could extend itself only partially or over the entire length of the building block. The collar could also be limited to one lateral face of the building block, as, for example, shown in figure 3. A collar could be present in at least two of the lateral faces of the building block, and then preferentially in two opposite lateral faces of the building block as. for example, shown in figure 4. In a special embodiment, these two opposite lateral faces are the longitudinal lateral faces of the building block. In the examples as shown in figures 1, 2, 5 and 6, there is a collar integrated into all the lateral faces of the building block. Because this collar is accessible via a lateral face to hook up suspension elements, the raised edge (5) of the collar (4) is provided with one or more openings, preferably distributed at regular distances over the length of the collar (4). To safeguard the accessibility to the centrally integrated recesses, it is obvious to the professional that there will always be openings provided in the collar and opposite to the centrally integrated openings. According to the invention the height (h) of the raised edge of the collar (4) is lower than the thickness (d) of the building block. The difference in height is defining for the space that provides access for hooking up suspension elements after processing the building block in a construction. The spatial values in the building block as shown in the examples were located between 2.0 and 5.0 cm.

In addition to the height (h) of the edge, the collar also has a certain excision depth (u) as shown in figure 2. It could be clear to the professional that the excision depth should only facilitate freely hooking up suspension elements (17) as shown in figure 1 without compromising the building block's strength. According to the invention, the excision depth of the collar is limited with a range from 1/5 to 1/2 of the thickness (d) of the building block, particularly from 1/4 to 1/3 of the entire width of the building block. When it rains, for example, it cannot be excluded, in case of a building block according to his invention, that water will collect in both the centrally and peripherally integrated recesses, but particularly the peripherally integrated recess, which can give rise to water damage, to the building construction in which building blocks according to this invention have been processed, over time. To prevent this, the building block is provided with one or more drainage elements (6), (8). In one of the embodiments, the peripherally integrated recess, particularly the collar (4) contains one or more drainage elements such as a conduit (6) from the collar directed to the outside. Or, in other words, the building block according to this invention is characterized by one or more drainage elements where these elements depart from within the peripherally integrated recess, in particular in the collar, and is/are directed to the outside (6). In a preferential embodiment, and as described in more detail below, the building block effectively contains one or more, in particular 2 or 3 central cavities. In this embodiment, the drainage elements (8), the peripherally located recesses and in particular the collar or collars (4) will connect with one or more of these centrally located cavities.

As already cited above, the centrally integrated recesses are accessible via the lateral faces of the building block. The accessibility to these recesses is possible by means of suitable openings in the lateral faces. The accessibility is realized by means of a groove (7) in the face of the building block. As shown in figures 1, 5 and 6, the length of such groove can be limited to the distance between the lateral faces and the centrally integrated recess (2), but the groove could also extend over the entire width of the building block, see, for example, figure 2. By analogy of the height of the raised edge of the collar, the depth (s) of the groove will determine the space that provides access for hooking up suspension elements after processing a building block in a construction. Typical groove depths go from 1/5 to 1/3 of the thickness of the building block. In a special embodiment, the depth (s) of the groove is equal to the space (=d-h) for the collar in the building block. There are no direct restrictions with regard to the width of the groove but a horizontal immobilization of the corresponding suspension element in the building block can be realized by adjusting this to the width of the corresponding suspension elements. Therefore, in an embodiment of the building block as described in this, the width of the groove is preferentially such that the suspension element fits transversally and slidably in the groove, with immobilization in the lateral direction. As will be clear to the professional that the width of the groove also impacts on the load carrying capability of the centrally integrated recess. The wider the groove, the larger the support surface and the associated load carrying capability and depending on the characteristics the suspension element, the suitable groove width will become clear to the professional. An example of such wide grooves (7b) is shown in figure 7. As an alternative, the support surface can be enlarged by providing multiple points of support, i.e. by providing multiple centrally integrated recesses in the building block. An example of this is shown in figure 5 where one of the building blocks shown has more centrally integrated recesses, at a regular distance form each other, which are accessible via the lateral faces by means of a groove to hook up a suspension element.

Insofar as the groove described herein in the first instance has to ensure that the central recess for hooking up the suspension elements (17) is accessible via a lateral face of the building block, these grooves could further contribute to the drainage of water that could accumulate in the collar (4) of the building block via the central recesses. The groove in itself could perform the role of drainage element when connected to the collar. In a further embodiment, the groove may contain a drainage element (8). In a specific embodiment, the additional drainage element consists of a transversal groove (8), which makes a connection between the peripherally integrated recess and the centrally integrated recess for hooking up suspension elements (17).

As becomes apparent from the figures, the building block could be a full building block (see figure 5) in which the necessary central recesses and peripheral collar are provided, or could contain one or more cavities (see figures 1, 2 and 6) in which the central and peripheral recesses have again been provided. The cavities not only make the building block lighter, but also provides space for, for example, processing utility lines or filling with insulation material. In a further embodiment, the building blocks of this invention are therefore provided with one of more cavities, preferably with one or more centrally located cavities. In the first embodiment and with reference to figure 1, the central section that contains the centrally integrated recess (2), is a full section, flanked by two cavities, i.e., by two laterally located cavities (10) and (11). With reference to figure 2, in a special embodiment it is even so that one of these cavities (9) could serve as the centrally located recess for hooking up a suspension element, in turn or otherwise flanked by the laterally located cavities (10) and (11). The flanking cavities may be similar or different in from, with as preference similar in form and mirrored at the opposite of the transversal centre line. Thus in a further embodiment, the building block contains a centrally located cavity (9) that also serves as recess for hooking up the heavier objects by means of suspension elements (17a) as, for example, shown in figure 1. The cavity (9) is preferably located in the middle of the building block. In another embodiment, the building block, in addition to this centrally located cavity (9), contains two laterally integrated cavities (10) and (11) where the latter are equal in form and are mirrored at the opposite of the transversal centre line (C-C) in a special embodiment.

As soon as there are cavities present in building block according to the invention, one can also refer to raised edges (13) that surround the cavities. As the connection surface for processing in a building construction has been reduced in this embodiment in order to, for example, prevent a piece of mortar ending up in te central and/or peripheral recesses, the face (12) of these raised edges will contain one or more depressions (14) that could collect the adhesive agents, and drain any excess adhesive agents to the centrally located cavities. With reference to figure 2, in the first embodiment, the depression presents as a milled out face of the raised walls, forming a low edge that surrounds the entire cavity and is located on the outside of the face. In addition, deeper cut out depressions, distributed at regular distances over the circumference of the face, could be found on the inside of the face. The latter will take care of central draining of excess adhesive agents. In a further embodiment, the face could contain additional recesses that could be used for the mutual positioning of the building blocks according to the invention. As shown in figure 2, the positioning elements (15) may consist of a recess in a given form for inserting a corresponding anchor plate (18). In a typical embodiment as shown in figure 10, the latter has a collar or raised edges (19) at the side of the central cavity that grips/grip the walls of the stacked building blocks. Upon gripping the anchor plate behind the raised edge, the collar or the raised edges (19) is/are pressed against the walls of the building blocks. The latter implies a clamping function that, for example, follows from the fact that the anchor plate and/or the raised edges or collar is/are constructed from resilient material. The professional is sufficiently aware of the material that is eligible for this, starting from metal to elastomers such as polyutherane In an alternative embodiment, the anchor plate (18) has an opening (20) into which the raised edges (19) could be inserted. In this embodiment, the anchor element therefore consists of 2 components, namely the even plate (18) that fits in the cavities (15) and the vertically ruffed plate (19) that form the upright edges of the anchor element after positioning. In this regard, the even plate (18) has been provided a recess (20) into which the vertical ruffed plate (19) can be pushed. After a layer of building blocks has been placed, the even plates (18) are placed in the cavities (15). The next building block is then positioned on this and the vertical fuffed plate (19) is lowered into the groove (20) with a similar shape in the horizontal plate. The ruffed plate (19) will lower until it is secured against the building block because of the fact that the vertical plate has the same conicity of the inner-wall of the building block. If this happens in the 2 corners, the building block is secured and cannot move any more.

In a further alternative form (see figure 9) the positioning elements (15) on the face of the building block consist of one or more embossed elements (15a) (studs, pins and the like), which grip onto the corresponding recesses (15b) at the bottom of the building block. It would be clear to the professional that in each suitable alternative, such as, for example, one where the overlying recesses in the faces and bottom face of the building block in which the connection plugs fit, are suitable for and could be accommodated in the scope of protection of the current application.

## Claims

1. A rectangular building block (1) having two short lateral faces and two long lateral faces, comprising of
- a centrally integrated recess (2) accessible via a long lateral face by means of a groove (7); and
- a peripherally (3) integrated recess accessible via a lateral face, said peripherally (3) integrated recess being peripherally to said building block, said peripherally (3) integrated recess being located in said lateral face, and presenting itself with a raised edge (5) and an excision depth (u) perpendicular with the upper surface of the building block in said lateral face, wherein the height (h) of the raised edge being measured from the base of the building block is lower than the thickness (d) of the building block,
wherein the thickness of the building block is the distance between the bottom surface and the top surface of the building block,
and the excision
depth is limited from 1/5 to 1/2 of the thickness of the building block,
**characterized in that** said peripherally (3) integrated recess accessible via a lateral side for hooking up suspension elements,
and said peripherally (3) integrated recess having a drainage element (6),
wherein the drainage element (6) is open toward the outside surface of the lateral face of the building block.

2. A building block according to claim 1, where the peripherally (3) integrated recess has been integrated into all of the lateral faces of the building block.

3. A building block according to claim 1 where the groove (7) also contains a transversal groove (8), which makes a connection between the peripherally integrated recess (3, 4) and the centrally integrated recess (2).

4. A building block according to one of the claims above, where it has been equipped with one or more centrally located cavities (9, 10, 11).

5. A building block according to claim 4, where two of these central cavities (10, 11) are located laterally.

6. A building block according to claim 4, where one of the centrally located cavities (9) corresponds with the centrally integrated recess, accessible from the outside, for hooking up suspension elements.

7. A building block according to claim 5, where the face (12) of the raised walls (13) that surrounds the lateral cavities contains one or more depressions (14).

8. A building block according to anyone of the claims above, where the excision (u) in the peripherally (3) integrated recess is connected to one or more of the centrally located cavities.

9. A building block according to claim 8, where the excision (u) in the peripherally (3) integrated recess is connected to the centrally located cavity (9).

10. A building block according to one of the claims above, where this building block has one or more positioning elements (15).

11. A building block according to claim 10, in which the positioning elements (15) are recesses, in which suitable blocking agents (16) can be positioned.

12. A construction comprising one or more of the building blocks according to one of the claims above.

## Patentansprüche

1. Ein rechteckiger Baustein (1) mit zwei kurzen Seitenflächen und zwei langen Seitenflächen, bestehend aus
- einer mittig integrierten Aussparung (2), die über eine lange Seitenfläche mittels einer Nut (7) zugänglich ist; und
- einer peripher (3) integrierten Aussparung, die über eine Seitenfläche zugänglich ist; die peripher (3) integrierte Aussparung ist peripher zum Baustein; die peripher (3) integrierte Aussparung befindet sich in der Seitenfläche; sie hat eine erhöhte Kante (5) und eine Ausschnitttiefe (u) senkrecht zur Oberseite des Bausteins in der Seitenfläche; die Höhe (h) der erhöhten Kante, gemessen vom Boden des Bausteins, ist geringer als die Dicke (d) des Bausteins, wobei die Dicke des Bausteins der Abstand zwischen der Unterseite und der Oberseite des Bausteins ist, und die Ausschnitttiefe auf 1/5 bis 1/2 der Bausteindicke begrenzt ist, **dadurch gekennzeichnet, dass** die peripher (3) integrierte Aussparung über eine Seitenfläche zum Einhängen von Aufhängeelementen zugänglich ist und die peripher (3) integrierte Aussparung ein Drainageelement (6) hat, wobei das Drainageelement (6) zur Außenfläche der Seitenfläche des Bausteins hin offen ist.

2. Ein Baustein nach Anspruch 1, wobei die peripher (3) integrierte Aussparung in alle Seitenflächen des Bausteins integriert wurde.

3. Ein Baustein nach Anspruch 1, wobei die Nut (7) auch eine Quernut (8) hat, die eine Verbindung zwischen der peripher integrierten Aussparung (3, 4) und der zentral integrierten Aussparung (2) herstellt.

4. Ein Baustein nach einem der vorhergehenden Ansprüche, wobei er einen oder mehrere zentral angeordnete Hohlräume (9, 10, 11) hat.

5. Ein Baustein nach Anspruch 4, wobei zwei dieser zentralen Hohlräume (10, 11) seitlich angeordnet sind.

6. Ein Baustein nach Anspruch 4, wobei einer der mittig angeordneten Hohlräume (9) mit der mittig integrierten, von außen zugänglichen Aussparung zum Einhängen von Aufhängeelementen übereinstimmt.

7. Ein Baustein nach Anspruch 5, wobei die Fläche (12) der erhöhten Wände (13), die die seitlichen Hohlräume umgibt, eine oder mehrere Vertiefungen (14) hat.

8. Ein Baustein nach einem der vorhergehenden Ansprüche, wobei der Ausschnitt (u) in der peripher (3) integrierten Aussparung mit einem oder mehreren der mittig gelegenen Hohlräume verbunden ist.

9. Ein Baustein nach Anspruch 8, wobei der Ausschnitt (u) in der peripher (3) integrierten Aussparung mit dem mittig gelegenen Hohlraum (9) verbunden ist.

10. Ein Baustein nach einem der vorhergehenden Ansprüche, wobei dieser Baustein ein oder mehrere Positionierelemente (15) hat.

11. Ein Baustein nach Anspruch 10, wobei die Positionierelemente (15) Aussparungen sind, in denen geeignete Blockierungsmittel (16) positioniert werden können.

12. Eine Konstruktion, die einen oder mehrere der Bausteine nach einem der obigen Ansprüche enthält.

## Revendications

1. Un élément de construction rectangulaire (1) ayant deux faces latérales courtes et deux faces latérales longues, comprenant
- un renfoncement intégré de manière centrale (2) accessible via une face latérale longue au moyen d'une rainure (7) ; et
- un renfoncement intégré de manière périphérique (3) accessible via une face latérale, ledit renfoncement intégré de manière périphérique (3) étant périphérique audit élément de construction, ledit renfoncement intégré de manière périphérique (3) étant situé dans ladite face latérale, et se présentant avec un bord surélevé (5) et une profondeur d'excision (u) perpendiculaire à la surface supérieure de l'élément de construction dans ladite face latérale, où la hauteur (h) du bord surélevé étant mesurée à partir de la base de l'élément de construction est inférieure à l'épaisseur (d) de l'élément de construction, où l'épaisseur de l'élément de construction est égale à la distance entre la surface de fond et la surface supérieure de l'élément de construction, et la profondeur d'excision est limitée de 1/5 à 1/2 de l'épaisseur de l'élément de construction, **caractérisée** dans ledit renfoncement intégré de manière périphérique (3) accessible via un côté latéral pour raccorder des éléments de suspension, et ledit renfoncement intégré de manière périphérique (3) ayant un élément de drainage (6), où l'élément de drainage (6) est ouvert vers la surface extérieure de la face latérale de l'élément de construction.

2. Un élément de construction conformément à la revendication 1, où le renfoncement intégré de manière périphérique (3) a été intégré dans toutes les faces latérales de l'élément de construction.

3. Un élément de construction conformément à la revendication 1 où la rainure (7) contient également une rainure transversale (8), qui établit une connexion entre le renfoncement intégré de manière périphérique (3, 4) et le renfoncement intégré de manière centrale (2).

4. Un élément de construction conformément à l'une des revendications ci-dessus, où ce dernier a été équipé d'une ou de plusieurs cavités situées au centre (9, 10, 11).

5. Un élément de construction conformément à la revendication 4, où deux de ces cavités centrales (10, 11) sont situées latéralement.

6. Un élément de construction conformément à la revendication 4, où une des cavités situées au centre (9) correspond au renfoncement intégré de manière centrale, accessible depuis l'extérieur, pour raccorder des éléments de suspension.

7. Un élément de construction conformément à la revendication 5, où la face (12) des parois surélevées (13) entourant les cavités latérales contient une ou plusieurs dépressions (14).

8. Un élément de construction conformément à une quelconque des revendications ci-dessus, où l'excision (u) dans le renfoncement intégré de manière périphérique (3) est connectée à une ou plusieurs des cavités situées au centre.

9. Un élément de construction conformément à la revendication 8, où l'excision (u) dans le renfoncement intégré de manière périphérique (3) est connectée à la cavité située au centre.

10. Un élément de construction conformément à l'une des revendications ci-dessus, où cet élément de construction a un ou plusieurs éléments de positionnement (15).

11. Un élément de construction conformément à la revendication 10, où les éléments de positionnement (15) sont des renfoncements, dans lesquels des agents bloquants appropriés (16) peuvent être positionnés.

12. Une construction comprenant un ou plusieurs des éléments de construction conformément à l'une des revendications ci-dessus.
